# EUROPEAN PATENT APPLICATION

(11) **EP 1 906 260 A1**
(43) Date of publication of application: **02.04.2008**
(21) Application number: 07108679.7
(22) Date of filing: 22.05.2007
(51) Int. Cl.: G03G 9/08, C08F 2/16

(54) **Method of preparing latex for toner composition and method of preparing toner composition using the same**

(30) Priority: 26.09.2006 KR 20060093512
(71) Applicant: SAMSUNG ELECTRONICS CO., LTD., Suwon-si, Gyeonggi-do 442-742 (KR)
(72) Inventor: Hong, Chang-kook, Yeongton-dong, Yeongton-gu, Gyeonggi-do (KR); Lee, Jeung-won, Gangnam-gu, Seoul (KR); Yon, Kyung-yol 508-1104, Hyojachon Samhwan, Seongnam-si, Gyeonggi-do (KR); Cheong, Min-young, Geumcheon-gu, Seoul (KR); Shim, Sang-eun, Ganseok 4-dong, Mandong-gu, Incheon (KR)
(74) Representative: Moy, David

(57) **Abstract**

A method of preparing a latex for a toner composition and a method of preparing a toner composition using the same. The method of preparing the latex for the toner composition includes preparing a monomer solution by dissolving a polyester-based monomer in an organic solvent and adding a vinyl-based monomer thereto, preparing an aqueous macromonomer solution by dissolving a macromonomer in water, preparing a solution in which monomers and macromonomer are suspended by mixing the monomer solution and the aqueous macromonomer solution, and polymerizing the monomers by adding a hydrophobic polymerization initiator to the suspended solution.

## Description

The present general inventive concept relates to a method of preparing a latex for a toner composition and a method of preparing a toner composition. More particularly, the present general inventive concept relates to a method of preparing a latex for a toner composition and a method of preparing a toner composition using the same, in which a toner composition having a high gloss and an excellent durability can be prepared and it is easy to regulate a fixing temperature and to control a structure and a size of toner particles using simpler and more environmentally friendly processes.

Toners are a type of recording materials used in image forming apparatuses in order to form an image on a recording medium. Toners are divided into monochromatic toners to form a monochromatic image and color toners to form a color image.

Various toner preparation methods are known for preparing a composition including a toner, but briefly, toners are generally prepared by mixing a binder resin, a colorant, and a wax, followed by pulverizing the mixture and classifying the toner particles according to the particle size. The details pertaining to the toner preparation method are described in detail below:
1) Kneading or extruding: kneading the mixture including a binder resin, a colorant, and a wax
2) Fine grinding or pulverizing
3) Classifying: separating particles according to their size
4) Processing with an external additive: adding an external additive to the toner particles in order to provide fluidity of toner particles and charge stability

If toner particles are prepared which are suitable for image formation using an electrophotographic method or an electrostatic latent image record method, it is difficult to precisely control the size and geometric size distribution of the toner particles, and only a toner shape can be controlled in a conventional pulverizing process. Additionally, if a toner particle having a small particle size (approximately 5 µm to approximately 8 µm) is prepared, the yield of the prepared toner is remarkably reduced by the classifying process. In other words, it is necessary to classify pulverized particles in order to adjust the size of toner particles, but if toner particles having a small particle size are classified, the yield of the toner particle is remarkably reduced and it is difficult to control the toner shape.

Accordingly, a toner prepared according to the above-described method has limitations regarding a modification and control of the toner structure in order to increase fixing properties, such as, low-temperature fixing or temporary fixing.

To overcome the above problems, methods of preparing a polymerized toner by a suspension or an emulsion/flocculation technique are provided. In the case of preparing a polymerized toner, toner particles having a desired size can be obtained without the classifying process necessary in the pulverizing toner preparation process, and the particle shape can be freely controlled to readily obtain a toner with a narrow geometric size distribution.

Among these methods, a suspension polymerization technique is performed to polymerize a polymer latex using water as a dispersion medium, a water-insoluble monomer, and a hydrophobic polymerization initiator in the presence of a polymer stabilizer, and to prepare particles.

When a toner is prepared using the polymerization technique, monomers usable as polymerization monomers, such as styrene monomers, are generally used, but polyester-based monomers may be used infrequently. This is because it is difficult to dissolve polyester-based monomers in a solvent and to polymerize polyester-based monomers in a solution, even though polyester-based monomers have an effect capable of providing a high gloss and a high particle uniformity to the polymerized toner. Therefore, polyester-based monomers are mainly used to pulverize the toner.

Accordingly, this polymerization technique is used to prepare a toner with superior qualities when compared to a toner prepared using the pulverization technique. However, the polymerization technique has the problem that processes are complicated, it is difficult to remove a stabilizer, and the remaining stabilizer generates additional problems. Also, it is not easy to use polyester-based monomers, even though they have excellent characteristics as a raw material of the toner, for the reasons described above.

In order to more efficiently perform the method of preparing a toner by the suspension polymerization technique, a method is required which solves the problem arising by the use of a stabilizer and is capable of effectively using a polyester-based monomer exhibiting excellent characteristics during toner preparation.

Suitably, an aim of the present invention is to provide a method of preparing a latex for a toner composition, and a method of preparing a toner composition, typically featuring (a) good and/or useful and/or beneficial propert(y)ies, and/or preferably addressing at least one or some of the problems noted above, elsewhere herein, or in the art.

Suitably, a further aim of the present invention is to provide an alternative method of preparing a latex for a toner composition, and method of preparing a toner composition, to those already known.

Suitably, a further aim of the present invention or embodiments thereof is to provide a method of preparing a latex for a toner composition, and a method of preparing a toner composition, with a desirable property or properties.

A further and preferred aim of embodiments of the invention is to provide an improved method of preparing a latex for a toner composition, and method of preparing a toner composition, preferably with certain advantageous properties.

A further preferred aim of the present invention or embodiments thereof is to provide a method of preparing a latex for a toner composition, and a method of preparing a toner composition, having an improved property or improved properties compared to those of the prior art.

Other aims and/or advantages of the invention will be set forth in part in the description herein and, in part, will be obvious from the description, or may be learned by practice of the invention.

According to the present invention there is provided a method of preparing a latex for a toner composition, and a method of preparing a toner composition, as set forth in the appended claims. Preferred features of the invention will be apparent from the dependent claims, and the description which follows.

The present general inventive concept provides a method of preparing a latex for a toner composition and a method of preparing a toner composition using the same, in which a toner composition having a high gloss and excellent durability can be prepared and it is easy to regulate a fixing temperature and to control a structure and size of toner particles using simpler and more environmentally friendly processes, because a latex for a toner composition having advantages of a polyester-based monomer and a vinyl-based monomer can be prepared by suspension polymerization without using a stabilizer.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept are achieved by providing a method of preparing a latex for a toner composition, the method including preparing a monomer solution by dissolving a polyester-based monomer in an organic solvent and adding a vinyl-based monomer thereto, preparing an aqueous macromonomer solution by dissolving a macromonomer in water, mixing the monomer solution and the aqueous macromonomer solution to prepare a solution in which the monomers and macromonomer are suspended, and polymerizing the monomers by adding a hydrophobic polymerization initiator to the suspended solution.

Thus, in a first aspect of the present invention there is provided a method of preparing a latex for a toner composition, the method comprising:
preparing a monomer solution by dissolving a polyester-based monomer in an organic solvent and adding a vinyl-based monomer thereto;
preparing an aqueous macromonomer solution by dissolving a macromonomer in water;
mixing the monomer solution and the aqueous macromonomer solution to prepare a solution in which the monomers and macromonomer are suspended; and
polymerizing the monomers by adding a hydrophobic polymerization initiator to the suspended solution.

The polyester-based monomer may preferably include a polyethylene terephthalate (PET) monomer, and preferably have a molecular weight of approximately 1,000 to approximately 100,000 and preferably a glass transition temperature of approximately 40°C to approximately 80°C.

The organic solvent may preferably include one of methylene chloride, ethyl acetate, and a mixture thereof.

The vinyl-based monomer may preferably be selected from the group consisting of a styrene monomer, an acrylate monomer, and a methacrylate monomer, and the macromonomer may preferably include an amphiphilic molecule and preferably be selected from the group consisting of polyethylene glycol-methacrylate, polyethylene glycol-ethyl ether methacrylate, polyethylene glycol-dimethacrylate, polyethylene glycol-modified urethane, and polyethylene glycol-modified polyester. A content of the polyester-based monomer may preferably be approximately 0.1% to approximately 50% by weight based on the weight of the vinyl-based monomer.

The hydrophobic polymerization initiator may preferably include azobisisobutylonitrile.

The foregoing and/or other aspects and utilities of the present general inventive concept are also achieved by providing a method of preparing a toner composition, the method including preparing a monomer solution by dissolving a polyester-based monomer in an organic solvent and adding a vinyl-based monomer thereto, preparing an aqueous macromonomer solution by dissolving a macromonomer in water, mixing the monomer solution and the aqueous macromonomer solution to prepare a solution in which the monomers and macromonomer are suspended, polymerizing the monomers by adding a hydrophobic polymerization initiator to the suspended solution to prepare a polymerized latex composition, and adding a wax, a colorant, and a dispersant to the polymerized latex composition.

Thus, in a second aspect of the present invention there is provided a method of preparing a toner composition, the method comprising:
preparing a monomer solution by dissolving a polyester-based monomer in an organic solvent and adding a vinyl-based monomer thereto;
preparing an aqueous macromonomer solution by dissolving a macromonomer in water;
mixing the monomer solution and the aqueous macromonomer solution to prepare a solution in which the monomers and macromonomer are suspended;
polymerizing the monomers by adding a hydrophobic polymerization initiator to the suspended solution to prepare a polymerized latex composition; and
adding a wax, a colorant, and a dispersant to the polymerized latex composition.

The polyester-based monomer may preferably include a polyethylene terephthalate (PET) monomer, and preferably have a molecular weight of approximately 1,000 to approximately 100,000 and preferably a glass transition temperature of approximately 40 °C to approximately 80 °C.

The organic solvent may preferably include one of methylene chloride, ethyl acetate, and a mixture thereof.

The vinyl-based monomer may preferably be selected from the group consisting of a styrene monomer, an acrylate monomer, and a methacrylate monomer, and the macromonomer may preferably include an amphiphilic molecule and preferably be selected from the group consisting of polyethylene glycol-methacrylate, polyethylene glycol-ethyl ether methacrylate, polyethylene glycol-dimethacrylate, polyethylene glycol-modified urethane, and polyethylene glycol-modified polyester. A content of the polyester-based monomer may preferably be approximately 0.1% to approximately 50% by weight based on the weight of the vinyl-based monomer.

The hydrophobic polymerization initiator may preferably include azobisisobutylonitrile.

The foregoing and/or other aspects and utilities of the present general inventive concept are also achieved by providing a method of preparing a latex for a toner composition, the method including preparing a monomer solution by dissolving a polyester-based monomer in an organic solvent and adding a vinyl-based monomer thereto, dissolving a macromonomer in water to prepare an aqueous macromonomer solution, mixing the monomer solution and the aqueous macromonomer solution to prepare a solution in which the monomers and macromonomer are suspended, and polymerizing the monomers by adding a hydrophobic polymerization initiator to the suspended solution to prepare a polymerized latex composition, wherein the macromonomer serves as a stabilizer to stabilize the monomers in the suspended aqueous solution and the method does not comprise a separate stabilizer washing process.

Thus, in a third aspect of the present invention there is provided a method of preparing a latex for a toner composition, the method comprising:
preparing a monomer solution by dissolving a polyester-based monomer in an organic solvent and adding a vinyl-based monomer thereto;
dissolving a macromonomer in water to prepare an aqueous macromonomer solution;
mixing the monomer solution and the aqueous macromonomer solution to prepare a solution in which the monomers and macromonomer are suspended; and
polymerizing the monomers by adding a hydrophobic polymerization initiator to the suspended solution to prepare a polymerized latex composition,
wherein the macromonomer serves as a stabilizer to stabilize the monomers in the suspended aqueous solution and the method does not comprise a separate stabilizer washing process.

The method may preferably further include adding a wax, a colorant, and a dispersant to the polymerized latex composition.

Where applicable, features and embodiments of any aspects of the present invention, as described herein, may be regarded as preferred features and embodiments of any of the other aspects of the present invention.

Reference will now be made in detail to the embodiments of the present general inventive concept. The embodiments are described below in order to explain the present general inventive concept.

The matters defined in the description such as a detailed construction and elements are provided to assist in a comprehensive understanding of the embodiments of the general inventive concept and are merely exemplary. Accordingly, those of ordinary skill in the art will recognize that various changes and modifications of the embodiments described herein can be made without departing from the scope and spirit of the general inventive concept. Also, descriptions of well-known functions and constructions are omitted for clarity and conciseness.

According to an exemplary embodiment of the present general inventive concept, a method of preparing a latex for a toner composition may include preparing a monomer solution by dissolving a polyester-based monomer in an organic solvent and adding a vinyl-based monomer thereto; preparing an aqueous macromonomer solution by dissolving a macromonomer in water; preparing a solution in which the monomers and macromonomer are suspended by mixing the monomer solution and the aqueous macromonomer solution; and polymerizing the monomers by adding a hydrophobic polymerization initiator to the suspended solution.

In the method of preparing a latex for a toner composition according to the above exemplary embodiment, the polyester-based monomer is first dissolved in the organic solvent.

Any polyester-based monomer usable in polymerization may be used as the polyester-based monomer usable in the above exemplary embodiment. For example, a polyester-based resin may be used as the polyester-based monomer. That is, a propylene oxide adduct of bisphenol A and an ethylene oxide adduct of bisphenol A, which are used as an alcohol component, and a terephthalic acid, a trimellitic anhydride, a fumaric acid, or a succinic acid derivative, which are used as an acid component, are polymerized to obtain the polyester-based resin.

Among polyester-based monomers, such as, a polyethylene terephthalate (PET) monomer may be used in the above exemplary embodiment. The PET monomer may have a molecular weight of approximately 1,000 to approximately 100,000 and a glass transition temperature of approximately 40°C to approximately 80°C.

Any organic solvent which is capable of dissolving the polyester-based monomer, particularly the PET monomer, may be used as the organic solvent usable in the above exemplary embodiment. The organic solvent may be one of methylene chloride, ethyl acetate, and a mixture thereof. Methylene chloride may also be used as the organic solvent.

The polyester-based monomer is dissolved in the organic solvent, the vinyl-based monomer is then added thereto, and the monomers are mixed together.

A monomer which has a vinyl group to be polymerized may be used as the vinyl-based monomer. The vinyl-based monomer may be selected from the group consisting of a styrene monomer, an acrylate monomer, and a methacrylate monomer.

A content of the polyester-based monomer dissolved in the organic solvent may be approximately 0.1 % to approximately 50% by weight based on the weight of the vinyl-based monomer.

If one toner particle is prepared in a hybrid form by polymerizing the polyester-based monomer together with the vinyl-based monomer as described above, the toner particle exhibits a high gloss and a high particle uniformity which are advantages of the polyester-based monomer. Additionally, the composition of the vinyl-based monomer, such as, a styrene-acryl-based resin, is changed, and thus, a fixing temperature and a toner structure can be controlled. In other words, when the polyester-based monomer and the vinyl-based monomer are used according to the above exemplary embodiment, the benefits of each can be simultaneously implemented in one toner.

After the polyester-based monomer and the vinyl-based monomer are dissolved in the organic solvent, a macromonomer is dissolved in water separately from the dissolution of the monomers, and an aqueous macromonomer solution is then prepared.

The macromonomer has amphiphilic (hydrophobic/hydrophilic) properties, and may include a polymer or an oligomer which has a polymerizable functional group at one terminal end. The macromonomer may have improved physical properties, such as the durability of the toner particles, by grafting or cross-linking. A hydrophobic portion, which is chemically bonded to a particle surface of the macromonomer, enables excellent long-term stability of particles to be obtained by steric stabilization. Additionally, the hydrophobic portion can control the particle size of a toner latex according to the amount or molecular weight of the macromonomer to be inserted.

In addition, the macromonomer can be used as a monomer to be polymerized during latex polymerization.

Furthermore, the macromonomer can serve as a colloidal stabilizer used in suspension polymerization. The stabilizer is used to stabilize a water-insoluble monomer in an aqueous solution during the suspension polymerization, and poly vinyl alcohol (PVA) is used as the stabilizer.

In the method for preparing a latex according to the above exemplary embodiment of the present general inventive concept, the macromonomer is used instead of the stabilizer to suspend and polymerize the monomer.

Accordingly, in the above exemplary embodiment, the macromonomer serves to stabilize and simultaneously polymerize monomers in the same manner as a conventional stabilizer, and thus, contributes to the formation of polymers. Therefore, the polymerization can be performed more effectively, and it is easy to separately remove the remaining stabilizer that has been used in polymerization to prepare a toner.

The macromonomer usable in the above exemplary embodiment may be a compound in which a chain of a compound, such as polyethylene oxide or polyethylene glycol (PEG), is modified or a vinyl group is introduced. Examples of the macromonomer may include polyethylene glycol-methacrylate, polyethylene glycol-ethyl ether methacrylate, polyethylene glycol-dimethacrylate, polyethylene glycol-modified urethane, and polyethylene glycol-modified polyester.

After the aqueous macromonomer solution is prepared, a monomer solution in which the polyester-based monomer and vinyl-based monomer are dispersed is mixed with the aqueous macromonomer solution. The macromonomer serving as a stabilizer stabilizes each monomer to obtain a solution in which the monomers are suspended in the aqueous liquid phase.

Once the monomers are stabilized in the aqueous liquid phase, a hydrophobic polymerization initiator is added to the suspended solution to initiate polymerization. Any material capable of initiating polymerization in an aqueous solution may be used, for example, azobisisobutylonitrile may be used, as the hydrophobic polymerization initiator.

According to another exemplary embodiment of the present general inventive concept, a method of preparing a toner composition may include preparing a latex according to the method of preparing a latex for a toner composition as described above, and adding a wax, a colorant, and a dispersant to the polymerized latex composition.

The wax is used as a release agent in order to prevent toner offset. Examples of the wax usable in this exemplary embodiment may include polyethylene, polypropylene, polyester, a carnauba wax, or the like, but the present general inventive concept is not limited thereto.

Colorants embody the colors of toner particles and can be divided into dye-based colorants and pigment-based colorants. Generally, any colorant which is widely used may be used as the colorant of this exemplary embodiment. For example, a pigment-based colorant, which has excellent thermal stability and light resistance, may be used as the colorant.

Examples of pigment-based colorants usable in the toner composition according to this exemplary embodiment may include azo-based pigments, phthalocyanine-based pigments, basic dye-based pigments, quinacridone-based pigments, dioxazine-based pigments, condensed azo-based pigments, chromates, ferrocyanides, oxides, sulfides, selenides, sulfates, silicates, carbonates, phosphates, metal powder, and carbon black, but are not necessarily limited thereto.

Since the pigment-based colorant is generally insoluble in water, the pigment-based colorant has low solubility in the prepared soluble latex solution. Accordingly, in many instances, a dispersant may be needed to disperse the colorant, and any dispersant which is widely used may be used as the dispersant of this exemplary embodiment.

Additionally, an external additive, such as silica, can be added to the dried toner particles to control the charge amount and other properties. Finally, a dry toner is prepared.

As described above, a latex for a toner composition is prepared using a suspension polymerization technique, but a dispersion polymerization technique may also be used.

The dispersion polymerization technique is performed to prepare a polymer latex using a water-insoluble monomer and a hydrophobic polymerization initiator in the presence of a polymer stabilizer. In the dispersion polymerization technique, ethanol or methanol may be used as a dispersion medium alone or in combination of two types of an organic solvent, such as toluene, benzene, and 2-methoxy ethanol, or a small amount of water. Additionally, the monomer, initiator, and stabilizer are soluble in the dispersion medium. At this time, instead of the stabilizer, the macromonomer is used to prepare a latex.

### EXAMPLE

Hereinafter, in Example 1, a toner composition is prepared using a macromonomer instead of a stabilizer when preparing a suspension-polymerized toner using a polyester-based monomer and a vinyl-based monomer according to an exemplary embodiment of the present general inventive concept. In Comparative Example 1, a toner composition is prepared using a conventional stabilizer, and in Comparative Examples 2 and 3, toner compositions are prepared using a macromonomer together with a stabilizer. It will be apparent to those skilled in the art that the description of the exemplary embodiments of the present general inventive concept is intended to be illustrative of the preparation of a latex for a toner composition and a toner composition, but not to limit the preparation method performed in this manner.

### Example 1

0.5g of polyethylene terephthalate (PET) was dissolved in 5 ml of a methylene chloride solvent, and then the obtained solution was mixed with 10g of a styrene monomer to obtain a homogeneous solution. Additionally, 5g of poly(ethylene glycol)-ethyl ether methacrylate (PEG-EEM, manufactured by Aldrich Chemical Co.) as a macromonomer was dissolved in 100g of distilled water to obtain a mixed solution. The homogeneous solution and the mixed solution as prepared above were agitated using ultrasonic waves to obtain a droplet in which the PET and styrene monomer were stabilized in an aqueous liquid phase.

To the droplet a dispersion was added, after a mixed monomer (wax : monomer = 1g : 2g) was added to 7g of ultrapure water, in which 1 g of Aquaron HS-10 (manufactured by Daiichi Kogyo Seiyaku Co., Ltd.) as a dispersant was dissolved, and the solution was homogenized using an ultrasonic disperser for about 10 minutes. After the resulting mixture was heated to 70°C while pursing with nitrogen gas, 0.1g of azobisisobutylonitrile (AIBN) as a hydrophobic polymerization initiator was added thereto, and then the mixture was stirred at 350 rpm for 24 hours to obtain a latex.

2g of an aqueous pigment particle solution (black, solid content of 40%) dispersed using the HS-10 as a dispersant was added to the latex during the reaction. The final toner thus prepared, which had an average particle size of approximately 10µm was dried, and a sample was then drawn from the final toner. The sample was analyzed by scanning electron microscope (SEM) and thermogravimetric analysis (TGA) techniques to examine the shape and thermal stability of the toner particles.

As described above, the monomers could be suspension- or dispersion-polymerized using the macromonomer without using a stabilizer, and accordingly, it was possible to prepare a toner composition having advantages of the PET and styrene resin without a separate stabilizer washing process.

### Comparative Example 1

1g of polyethylene terephthalate (PET) was dissolved in 10 ml of a methylene chloride solvent, and then the obtained solution was mixed with 10g of a styrene monomer to obtain a homogeneous solution. Additionally, 1g of poly vinyl alcohol (PVA) was dissolved in 100g of distilled water to obtain a mixed solution. The homogeneous solution and the mixed solution as prepared above, were agitated using ultrasonic waves to obtain a droplet in which the PET and styrene monomer were stabilized in an aqueous liquid phase. After the resulting mixture was heated to 70°C while pursing with nitrogen gas, 0.1g of azobisisobutylonitrile (AIBN) as a hydrophilic polymerization initiator was added thereto, and then the mixture was stirred at 350 rpm for 24 hours to obtain a latex. After the latex was dried, a sample was drawn from the latex and analyzed by scanning electron microscope (SEM) technique.

As described above, it was possible to prepare a toner composition having advantages of the PET and styrene resin using a conventional stabilizer in the preparation of the latex. However, since a small amount of stabilizer was added, the toner composition had poor stability. Accordingly, the toner particles were not completely formed and bonded to each other, and thus it was impossible to obtain spherical-shaped particles with high stability.

### Comparative Example 2

0.5g of polyethylene terephthalate (PET) was dissolved in 5 ml of a methylene chloride solvent, and then the obtained solution was mixed with 10g of a styrene monomer to obtain a homogeneous solution. Additionally, 3g of poly vinyl alcohol (PVA) as a stabilizer was dissolved in 100g of distilled water to obtain a mixed solution. The homogeneous solution and the mixed solution, as prepared above, were agitated using ultrasonic waves to obtain a droplet in which the PET and styrene monomer were stabilized in an aqueous liquid phase.

To the droplet was added a dispersion, after a mixed monomer (wax : monomer = 1 g : 2g) was added to 7g of ultrapure water, in which 1 g of Aquaron HS-10 (manufactured by Daiichi Kogyo Seiyaku Co., Ltd.) as a dispersant was dissolved, and the solution was homogenized using an ultrasonic disperser for about 10 minutes. After the resulting mixture was heated to 70°C while pursing with nitrogen gas, 0.1g of azobisisobutylonitrile (AIBN) as a hydrophilic polymerization initiator was added thereto, and then the mixture was stirred at 350 rpm for 24 hours to obtain a latex.

2g of an aqueous pigment particle solution (black, solid content of 40%) dispersed using the HS-10 as a dispersant was added thereto during the reaction. The final toner thus prepared which had an average particle size of approximately 40µm was dried, and a sample was then drawn from the final toner. The sample was analyzed by scanning electron microscope (SEM) and thermogravimetric analysis (TGA) techniques to examine the shape and thermal stability of the toner particles.

Accordingly, it was found that the toner particles prepared using the stabilizer had an average particle size larger than the toner particles obtained in Example 1.

As described above, it was possible to prepare a toner composition having advantages of the PET and styrene resin using a conventional stabilizer in the preparation of the latex. However, it was difficult to reduce the average particle size of the toner particles.

### Comparative Example 3

A toner composition was prepared in the same manner as in Comparative Example 2, except that a mixture of a styrene monomer, an n-butyl acrylate monomer, and a methacrylic acid monomer (the total weight of the mixture was 10g, and the weight ratio was 7 : 2 : 1 to 6.5 : 3.0 : 0.5, respectively) was used instead of the styrene monomer. The toner having a volume average particle size of approximately 10 µm was shaped into particles, followed by cooling and filtration to obtain toner particles.

As described above, it was possible to prepare a toner composition having advantages of the PET and styrene resin using a conventional stabilizer in the preparation of the latex, but it was needed to remove the remaining stabilizer that has been used in polymerization.

As described above, according to exemplary embodiments of the present general inventive concept, the latex for a toner composition having advantages of the polyester-based and vinyl-based monomers can be prepared without using the conventional stabilizer. Therefore, the latex for a toner composition and the toner composition prepared using the latex can be prepared using simpler and more environmentally friendly processes because it is not necessary to wash the stabilizer.

Additionally, according to exemplary embodiments of the present general inventive concept, it is possible to obtain a toner composition which exhibits high gloss, excellent durability, low-temperature fixing properties, and controllability of the structure of toner.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of preparing a latex for a toner composition, the method comprising:
preparing a monomer solution by dissolving a polyester-based monomer in an organic solvent and adding a vinyl-based monomer thereto;
preparing an aqueous macromonomer solution by dissolving a macromonomer in water;
mixing the monomer solution and the aqueous macromonomer solution to prepare a solution in which the monomers and macromonomer are suspended; and
polymerizing the monomers by adding a hydrophobic polymerization initiator to the suspended solution.

2. The method of claim 1, wherein the polyester-based monomer comprises a polyethylene terephthalate (PET) monomer.

3. The method of either of claims 1 and 2, wherein the polyester-based monomer has a molecular weight of approximately 1,000 to approximately 100,000 and a glass transition temperature of approximately 40°C to approximately 80°C.

4. The method of any preceding claim, wherein the organic solvent comprises one of methylene chloride, ethyl acetate, and a mixture thereof.

5. The method of any preceding claim, wherein the vinyl-based monomer is selected from the group consisting of a styrene monomer, an acrylate monomer, and a methacrylate monomer.

6. The method of any preceding claim, wherein the macromonomer comprises an amphiphilic molecule.

7. The method of any preceding claim, wherein the macromonomer is selected from the group consisting of polyethylene glycol-methacrylate, polyethylene glycol-ethyl ether methacrylate, polyethylene glycol-dimethacrylate, polyethylene glycol-modified urethane, and polyethylene glycol-modified polyester.

8. The method of any preceding claim, wherein the hydrophobic polymerization initiator comprises azobisisobutylonitrile.

9. The method of any preceding claim, wherein a content of the polyester-based monomer is approximately 0.1 % to approximately 50% by weight based on the weight of the vinyl-based monomer.

10. A method of preparing a toner composition, the method comprising:
preparing a monomer solution by dissolving a polyester-based monomer in an organic solvent and adding a vinyl-based monomer thereto;
preparing an aqueous macromonomer solution by dissolving a macromonomer in water;
mixing the monomer solution and the aqueous macromonomer solution to prepare a solution in which the monomers and macromonomer are suspended;
polymerizing the monomers by adding a hydrophobic polymerization initiator to the suspended solution to prepare a polymerized latex composition; and
adding a wax, a colorant, and a dispersant to the polymerized latex composition.

11. The method of claim 10, wherein the polyester-based monomer comprises a polyethylene terephthalate (PET) monomer.

12. The method of either of claims 10 and 11, wherein the polyethylene terephthalate (PET) monomer has a molecular weight of approximately 1,000 to approximately 100,000 and a glass transition temperature of approximately 40°C to approximately 80°C.

13. The method of any of claims 10 to 12, wherein the organic solvent comprises one of methylene chloride, ethyl acetate and a mixture thereof.

14. The method of any of claims 10 to 13, wherein the vinyl-based monomer is selected from the group consisting of a styrene monomer, an acrylate monomer, and a methacrylate monomer.

15. The method of any of claims 10 to 14, wherein the macromonomer comprises an amphiphilic molecule.

16. The method of any of claims 10 to 15, wherein the macromonomer is selected from the group consisting of polyethylene glycol-methacrylate, polyethylene glycol-ethyl ether methacrylate, polyethylene glycol-dimethacrylate, polyethylene glycol-modified urethane, and polyethylene glycol-modified polyester.

17. The method of any of claims 10 to 16, wherein the hydrophobic polymerization initiator comprises azobisisobutylonitrile.

18. The method of any of claims 10 to 17, wherein a content of the polyester-based monomer is approximately 0.1 % to approximately 50% by weight based on the weight of the vinyl-based monomer.

19. A method of preparing a latex for a toner composition, the method comprising:
preparing a monomer solution by dissolving a polyester-based monomer in an organic solvent and adding a vinyl-based monomer thereto;
dissolving a macromonomer in water to prepare an aqueous macromonomer solution;
mixing the monomer solution and the aqueous macromonomer solution to prepare a solution in which the monomers and macromonomer are suspended; and
polymerizing the monomers by adding a hydrophobic polymerization initiator to the suspended solution to prepare a polymerized latex composition,
wherein the macromonomer serves as a stabilizer to stabilize the monomers in the suspended aqueous solution and the method does not comprise a separate stabilizer washing process.

20. The method of claim 19, further comprising:
adding a wax, a colorant, and a dispersant to the polymerized latex composition.
